# EUROPEAN PATENT APPLICATION

(11) **EP 3 269 938 A1**
(43) Date of publication of application: **17.01.2018**
(21) Application number: 17180729.0
(22) Date of filing: 11.07.2017
(51) Int. Cl.: F01D 9/04

(54) **SYSTEM AND METHOD FOR REDUCED STRESS VANE SHROUD ASSEMBLY**

(30) Priority: 13.07.2016 US 201615208913
(71) Applicant: General Electric Company, Schenectady, NY 12345 (US)
(72) Inventor: SHANTI, Sharan, 560066 Bangalore (IN); AR, Nandakumar, 560066 Bangalore (IN); HANSEN, Christian Michael, Greenville, SC South Carolina 29615 (US); LATIMER, Jeremy Peter, Greenville, SC South Carolina 29615 (US)
(74) Representative: Lee, Brenda

(57) **Abstract**

This disclosure provides systems and methods for reducing stress in vane shroud assemblies 100 by defining a gap between adjacent portions of the airfoil 120 and the shroud 130 whereby stress from the securing force is relieved in a portion of the shroud. The airfoil has a distal end with a contact surface and a tenon 422. The shroud has a contact surface with the airfoil and accommodates the tenon. An attachment device provides the securing force between the airfoil and shroud contact surfaces through the shroud and the gap serves to reduce stress on the shroud.

## Description

### BACKGROUND

The disclosure relates generally to turbomachines, and more particularly, to vane shroud assemblies, such as vane shroud assemblies for compressor stages in a gas turbine.

Turbomachines, such as gas turbines, include one or more rows of airfoils, including stationary airfoils referred to as stator vanes and rotating airfoils referred to as rotor blades or buckets. A gas turbine may include an axial compressor at the front, one or more combustors around the middle, and a turbine at the rear. Typically, an axial compressor has a series of stages with each stage comprising a row of rotor blades followed by a row of stationary stator vanes. Accordingly, each stage generally comprises a pair of rotor blades and stator vanes. Typically, the rotor blades increase the kinetic energy of a fluid that enters the axial compressor through an inlet and the stator vanes convert the increased kinetic energy of the fluid into static pressure through diffusion. Accordingly, both sets of airfoils play a vital role in increasing the pressure of the fluid.

In the case of stator vanes, the ring of airfoils are connected to an outer casing at the base of the airfoils to form the ring and may also be connected to the adjacent airfoils in the ring by an inner shroud. In many applications, it is not practical to manufacture an integral base, stator vane, and vane shroud. Thus, each stator vane in the ring may be produced independently, often including an integral base section, and assembled into the complete ring. The shroud may be produced as one or more separate components that are attached to the inward facing ends of the stator vanes. In some embodiments, a single vane shroud is provided for each stator vane. In other embodiments, multiple adjacent stator vanes may be attached to a multi-vane shroud. A stator vane, vane shroud, and one or more additional attachment components, such as bolts, bushings, washers, and other components may be referred to as a vane shroud assembly. The vane and shroud may each include features for engagement and attachment to each other. In some designs, the vane incorporates a tenon, or extension from the end of the airfoil, that extends into and/or through a compatible opening in the shroud and a bushing is also inserted into the opening in the shroud and secured with a bolt to attach the shroud to the vane.

Axial compressors incorporating stator vanes are used in a variety of applications, including land based gas turbines, jet engines, high speed ship engines, small scale power stations, or the like. Similar axial compressors may be used in other applications, such as large volume air separation plants, blast furnace air, fluid cracking air, propane dehydrogenation, or other industrial applications.

### SUMMARY

A first aspect of this disclosure provides a system comprising an airfoil, a shroud, and an attachment device. The airfoil has a base end and a distal end and the distal end comprises a shroud contact surface and a tenon. The shroud has a first contact surface in contact with the shroud contact surface of the airfoil and a second contact surface for receiving a securing force. At least a portion of the securing force is translated through the first contact surface to the airfoil. The attachment device attaches to the airfoil and provides the securing force to the shroud. The distal end of the airfoil and the shroud define a gap between adjacent portions of the airfoil and the shroud whereby stress from the securing force is relieved in a portion of the shroud.

A second aspect of the disclosure provides a method of providing a reduced stress vane shroud assembly. An airfoil having a base end and a distal end is positioned for assembly. The distal end of the airfoil comprises a shroud contact surface and a tenon. The tenon of the airfoil is inserted into a shroud with a first contact surface placed in contact with the shroud contact surface of the airfoil. The shroud includes a second contact surface for receiving a securing force. An attachment device is inserted into the tenon of the airfoil through the shroud. The attachment device is secured to the airfoil, whereby at least a portion of a securing force from the attachment device is translated through the first contact surface of the shroud to the shroud contact surface of the airfoil. The distal end of the airfoil and the shroud define a gap between adjacent portions of the airfoil and the shroud whereby stress from the securing force is relieved in a portion of the shroud.

The illustrative aspects of the present disclosure are arranged to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a side view of an example vane shroud assembly.
FIG. 2 shows a side perspective view of the example vane shroud assembly of Fig. 1.
FIG. 3 shows a front perspective view of the example vane shroud assembly of Fig. 1.
FIG. 4 shows a cross-sectional view of portion of an example vane shroud assembly, such as the vane shroud assembly of Fig. 1, in the vicinity of the tenon, attachment device, and contact surfaces between the airfoil and shroud.
FIG. 5 shows an exploded perspective view of a portion of a vane shroud assembly.
FIG. 6 shows a cross-sectional view of a portion of another example vane shroud assembly in the vicinity of the tenon, attachment device, and contact surfaces between the airfoil and shroud.
FIG. 7 shows a cross-sectional view of a portion of another example vane shroud assembly in the vicinity of the tenon, attachment device, and contact surfaces between the airfoil and shroud.
FIG. 8 shows a cross-sectional view of a portion of another example vane shroud assembly in the vicinity of the tenon, attachment device, and contact surfaces between the airfoil and shroud.
FIG. 9 shows a cross-sectional view of a portion of another example vane shroud assembly in the vicinity of the tenon, attachment device, and contact surfaces between the airfoil and shroud.
FIG. 10 shows a cross-sectional view of a portion of another example vane shroud assembly in the vicinity of the tenon, attachment device, and contact surfaces between the airfoil and shroud.
FIG. 11 shows a cross-sectional view of a portion of another example vane shroud assembly in the vicinity of the tenon, attachment device, and contact surfaces between the airfoil and shroud.
FIG. 12 shows a front perspective view of the example vane shroud assembly for a shroud that covers multiple airfoils.
FIG. 13 shows an exploded perspective view of a portion of a vane shroud assembly with multiple attachment devices.
FIG. 14 shows a flow chart of an example method of installing or assembling a vane shroud assembly, such as one of the vane shroud assemblies shown in the other figures.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION

One challenge of simplifying stator vane shroud assemblies, is the potential for stress-based distortion of the shroud due to the forces securing the shroud to the vane. In particular, direct clamping of the shroud to the vane raises the potential for stress-based distortions where the force from a bolt or similar attachment mechanism translate through surface contact between the shroud and the vane. Alternate configurations of the contact surfaces of the shroud and vane may be able to reduce the stress and improve ease of assembly and long-term reliability.

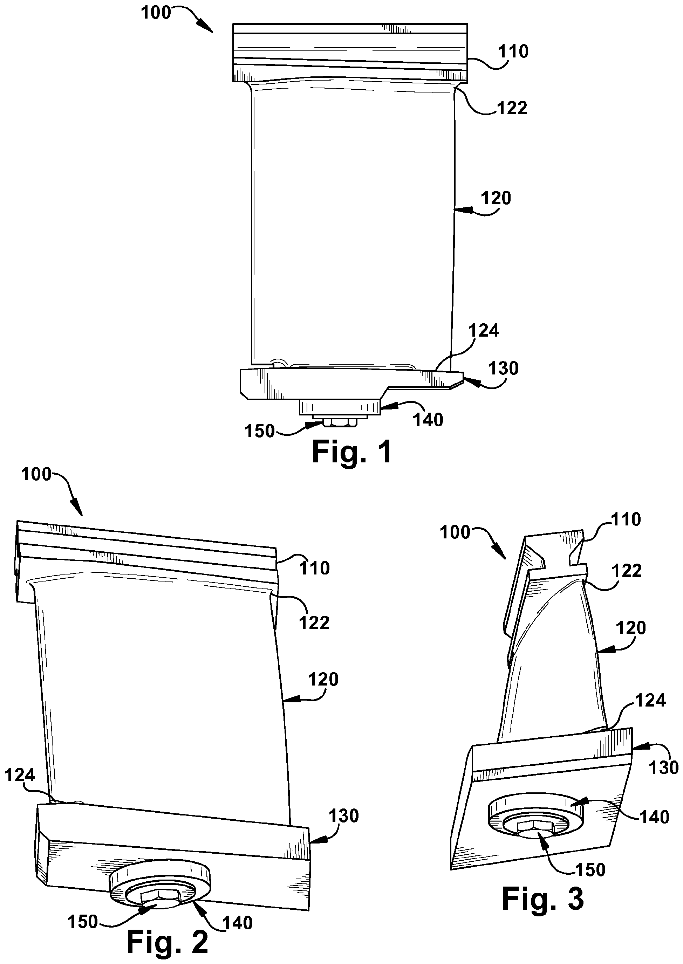

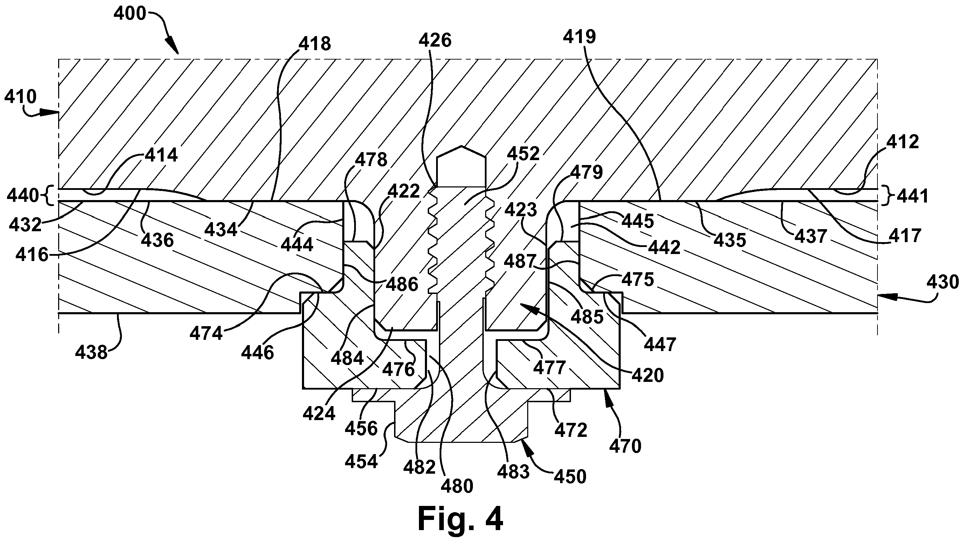

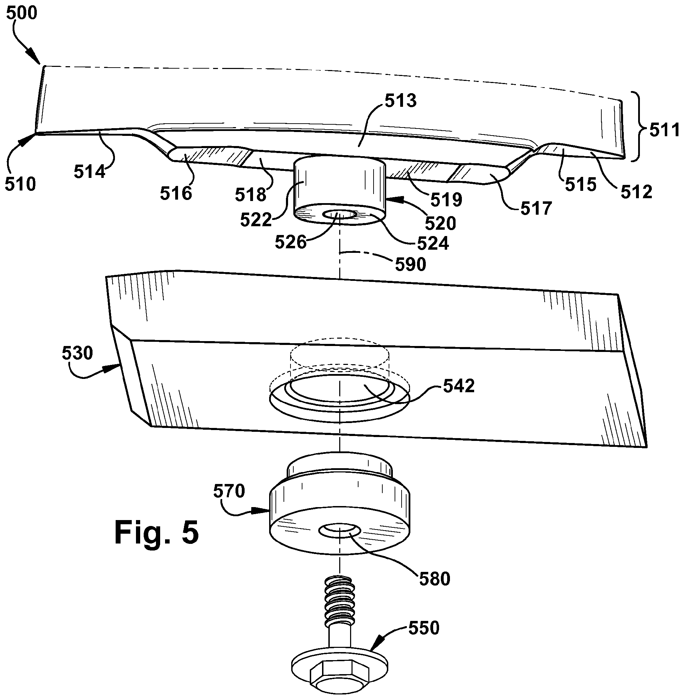

Figs. 1-3 show an example vane shroud assembly 100 in various views. The vane shroud assembly 100 includes various components that are assembled and attached to from the installed vane shroud assembly 100. For simplicity, only a single vane shroud assembly 100, including a single airfoil 120 with integral base 110 is shown in Figs. 1-3 without the ring, adjacent airfoils, and other turbomachine components with which it would be assembled in an actual installation. In the embodiment shown, the vane shroud assembly 100 includes an airfoil 120 with the integral base 110 continuous with the base end 122 of the airfoil 120. The shroud 130 is installed on the distal end 124 of the airfoil 120. The shroud 130 is positioned over a tenon (not shown) that forms part of the distal end 124 of the airfoil 120 and is secured to the airfoil 120 by a bushing 140 and an attachment device 150. In the example shown, the attachment device 150 is a bolt and washer; however other mechanisms for attaching may also be employed such as but not limited to a screw, threaded hex fastener, a threaded cap (and compatible threaded post from the airfoil), interference-fit plug, or other fastener. A more detailed example of the components and interface for attaching a shroud to an airfoil, such as may be used for the vane shroud assembly 100, is shown and described below with regard to Figs. 4 and 5.

Fig. 4 shows a cross-sectional view of portion of an example vane shroud assembly 400 proximate the distal end 412 of the airfoil 410 in the vicinity of the tenon 420 and showing a portion of the shroud 430 and the attachment device 450 and bushing 470. Fig. 4 shows an example of the contact surfaces between the airfoil 410 and the shroud 430, such as could be used for assembling the vane shroud assembly 100 of Figs. 1-3.

The airfoil 410 includes a distal end surface 414 that includes one or more substantially parallel surfaces generally perpendicular to a height of the airfoil 410 defined from the base (not shown) of the airfoil to the distal end 412. In the example shown, the distal end surface 414 includes recessed surfaces 416, 417 on either side of airfoil 410 from the tenon 420. The distal end surface 414 further includes shroud contact surfaces 418, 419 that protrude above the recessed surfaces 416, 417 and are recessed from the tenon 420. The shroud contact surfaces 418, 419 provide a contact surface between the distal end surface 414 and the shroud 430. The contact surfaces 418, 419 receive the contact force from the shroud 430 to hold the shroud 430 in place once assembled. The recessed surfaces 416, 417 reduce the contact area between the distal end surface 414 and the shroud 430 and define one side of gaps 440, 441 between the distal end surface 414 and the shroud 430. The majority of the recessed surfaces 416, 417 define a planar surface and the majority of the contact surfaces 418, 419 define another but separate planar surface connected by transitional surfaces which could include a slope (as shown) or a step with a perpendicular transition. The recessed surfaces 416, 417 and the contact surfaces 418, 419 are generally parallel to one another. In some embodiments, they are substantially parallel, having an angular difference between the planar surfaces of less than 15 degrees. The tenon 420 projects from the distal end surface 414. In the example shown, the tenon 420 projects from the contact surfaces 418, 419, which are further surrounded by the recessed surfaces 416, 417. The tenon 420 provides a projection over which the shroud 430 may be placed during assembly and to which the attachment device 450 can be connected to secure the shroud 430 to the airfoil 410. The tenon 420 includes lateral surfaces 422, 423 and an end surface 424. An attachment recess 426 is defined in the tenon 420 and includes an opening in the end surface 424 for receiving the attachment device 450. In the example shown, the attachment recess 426 is threaded to accommodate a threaded attachment device 450, such as a bolt, screw, or other fastener. Note that in the example shown, the end surface 424 of the tenon 420 does not receive any contact force from the attachment device 450. The attachment force is exerted through the retaining force on the threads of the attachment device 450 and transferred through the attachment device 450 and the bushing 470 to the shroud 430 and through the shroud 430 to the contact surfaces 418, 419 of the airfoil 410. In the example shown, the tenon 420 has a height that is greater than the thickness of the shroud 430 such that it protrudes through the shroud 430 when the shroud 430 is seated in contact with the contact surfaces 418, 419 of the airfoil 410.

The vane shroud assembly 400 includes the shroud 430, a portion of which is shown in Fig. 4. The shroud 430 includes an airfoil facing surface 432 and a distal surface 438 opposite the airfoil facing surface. The airfoil facing surface 432 includes first contact surfaces 434, 435, a portion of the airfoil facing surface 432 in surface contact with the contact surfaces 418, 419 of the airfoil 410, and first non-contact surfaces 436,437, a portion of the airfoil facing surface 432 that is not in contact with the contact surfaces 418, 419 of the airfoil 410. The first non-contact surfaces 436, 437 define an opposite portion of the gaps 440, 441 from the recessed surfaces 416, 417 of the airfoil 410. The shroud 430 further defines a through hole 442 with lateral surfaces 444, 445 to accommodate the tenon 420 and, in the example shown, the bushing 470 between the tenon 420 and the lateral surfaces 444, 445. The through hole 442 has a diameter larger than the diameter of the tenon 420 such that the tenon 420 can be inserted in the through hole 442 for seating the shroud 430 on the airfoil 410. The distal surface 438 provides second contact surfaces 446, 447 for receiving the attachment force from the attachment device 450. In the example shown, the distal surface 438 includes recessed second contact surfaces 446, 447 for surface contact with the bushing 470, which receives the attachment force from the attachment device 450. In the example shown, shroud 430 includes a substantially planar airfoil facing surface 432, but alternate designs may include recesses or other features in the airfoil facing surface 432 to assist in defining the first contact surfaces 434, 435, the first non-contact surfaces 436, 437, and the gaps 440,441.

The attachment device 450 may be any device for providing a mechanical attachment force between the shroud 430 and the airfoil 410 and, more specifically, between the first contact surfaces 434, 435 of the shroud 430 and the contact surfaces 418, 419 of the airfoil 410. In the example shown, the attachment device 450 is a bolt having a threaded portion 452 extending into and threadably engaged with the attachment recess 426 in the tenon 420 of the airfoil 410 to retain the attachment device 450, shroud 430, and bushing 470 in place. The attachment device 450 further provides a hexagonal head 454 enabling the bolt to be tightened in place and a head contact surface 456 for providing the attachment force to the shroud 430 through the bushing 470.

The bushing 470 is an additional component of the example vane shroud assembly 400 that is used in some embodiments to improve installation and retention of the shroud 430 on the airfoil 410. The bushing 470 serves to receive the attachment force from the attachment device 450 and direct it to the second contact surfaces 446, 447 of the shroud 430, rather than to the tenon 420. The bushing 470 is configured to laterally position and retain the shroud 430 relative to the tenon 420 and may be made of a conforming and wear resistant material to serve as an interface between adjacent components. The bushing 470 includes an attachment device contact surface 472, at least a portion of which engages the head contact surface 456 of the attachment device 450. The bushing 470 may also include shroud contact surfaces 474, 475 opposite the attachment device contact surface 472 for engaging the second contact surfaces 446, 447 of the shroud 430. The contact force received by the attachment device contact surface 472 is translated through the bushing 470 and through the shroud contact surfaces 474, 475 to the second contact surfaces 446, 447 of the shroud 430. The bushing 470 may include one or more additional surfaces parallel the attachment device contact surface that are non-contact surfaces related to lateral spacing and do not transfer any contact force to other components. For example, the tenon end facing surfaces 476, 477 define a gap between the end surface 424 of the tenon 420 and do not serve to convey any contact force to the tenon. As another example, the airfoil distal surface facing surfaces 478, 479 define a gap between the distal end surface 414 of the airfoil and do not serve to convey any contact force to the airfoil surface. The bushing 470 also provides lateral spacing between the other components and may include various configurations of lateral contact and non-contact surfaces between adjacent components. The bushing 470 defines a through hole 480 through which the attachment device 450 may be inserted and defined by lateral surfaces 482, 483. In the example shown, the lateral surfaces 482, 483 for accommodating the attachment device 450 do not contact the adjacent surfaces of the attachment device 450. The bushing 470 may also include a recess for receiving the tenon 420 defined by lateral surfaces 484, 485. In the example shown, the lateral surfaces 484, 485 accommodating the tenon 420 do contact the lateral surfaces 422, 423 of the tenon 420. The exterior lateral surfaces 486, 487 of the bushing 470 may be designed to seat within the through hole 442 of the shroud 430 and engage at least a portion of the lateral surfaces 444, 445. Other configurations of the bushing 430 are possible and some vane shroud assemblies may not use a bushing at all.

Fig. 5 shows an exploded perspective view of a portion of a vane shroud assembly 500. The vane shroud assembly 500 may be similar to the vane shroud assemblies 100 and 400 and use similar installation, retention, and stress reduction methods. The vane shroud assembly 500 includes an airfoil 510 (showing only the distal end), a shroud 530, an attachment device 550, and a bushing 570. Fig. 5 shows how the components may be assembled along an axis 590 parallel to the height dimension of the airfoil 510. The shroud 530 defines a through hole 542 that fits over the tenon 520 of the airfoil 510. The bushing 570 can be seated within the through hole 542 such that it surrounds the tenon 520 and engages the lateral surfaces of the through hole 542 in the shroud 530. The attachment device 550 is inserted through the through hole 580 in the bushing 570 and into the attachment recess 526 in the tenon 520 of the airfoil 510 to assemble the vane shroud assembly 500.

Fig. 5 also provides a further view of the distal end surface 512 and the surface features incorporated in the example vane shroud assembly 500 (as may also be present in other example vane shroud assemblies). The tenon 520 has an elliptical cross-section and projects from the adjacent portion of the distal end surface 512 with a perpendicular lateral surface 522 and a parallel end surface 524. Immediately adjacent to the tenon 520 on either side are contact surfaces 518, 519 for engaging a contact surface (not shown) on the shroud 530. Immediately adjacent the contact surfaces 518, 519 on either side are recessed surfaces 516, 517 arranged to provide a gap between the shroud 530 and the distal end surface 512. Beyond the recessed surfaces 516, 517 the distal end surface 512 may further recede to the top edge surfaces 514, 515 of the blade 511 of the airfoil 510. The contact surfaces 518, 519 and adjacent recessed surfaces 516, 517 may define a tenon shoulder 513 which surrounds the tenon 520, provides a mounting structure for the shroud 530, and is continuous with but functionally distinct from the blade 511 of the airfoil 510. The substantially stepped configuration of the distal end surface 512 defines a number of substantially planar surfaces with transition surfaces (stepped or sloped) between each. Due to aerodynamic or other design considerations, these surfaces may not be perfectly parallel but substantially parallel, meaning the adjacent surface planes are oriented less than 15 degrees askew from adjacent planes, with the exception of transition areas between planes.

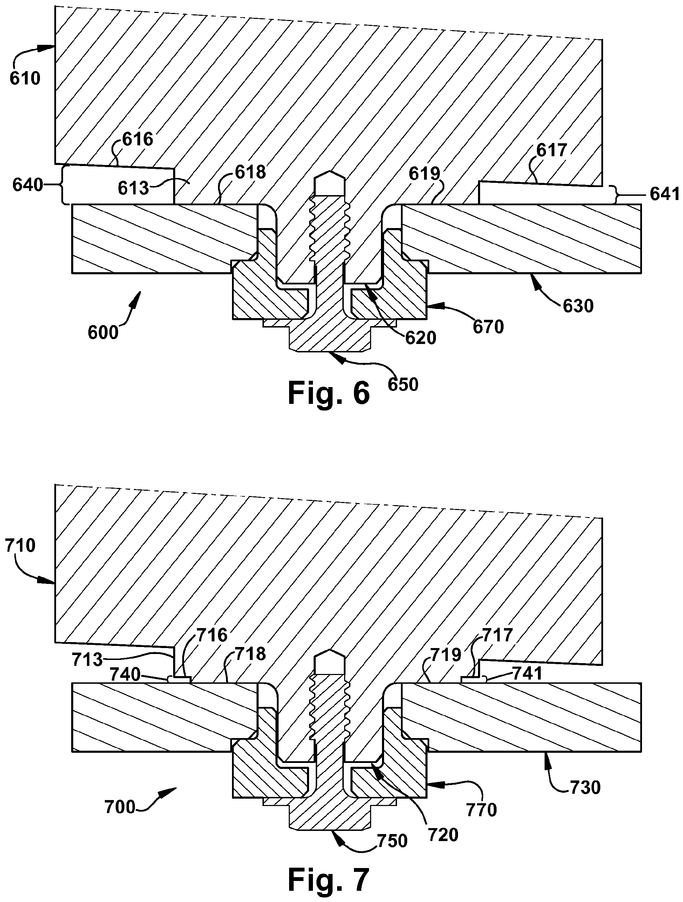

Figs. 6-11 shows cross-sectional views of a portion of various example vane shroud assemblies in the vicinity of the tenon, attachment device, and contact surfaces between the airfoil and shroud in order to illustrate various alternatives for reduced stress attachment of the shroud to the airfoil. These alternatives will be described at a high-level and follow the same general design principles as the examples described above with regard to Figs. 1-5. Similar structures and terms in the drawings and description below may be understood as variations on the corresponding structures described in greater detail above.

In Fig. 6, an example vane shroud assembly 600 is shown where the tenon shoulder 613 of the airfoil 610 provides the contact surfaces 618, 619 for engaging the shroud 630. The recessed surfaces 616, 617 defining the gaps 640, 641 are the top edge surfaces of the blade of the airfoil 610. The tenon 620, shroud 630, attachment device 650, and bushing 670 may be otherwise similar to those described above with regard to Figs. 1-5.

In Fig. 7, an example vane shroud assembly 700 is shown where the tenon shoulder 713 of the airfoil 710 includes both the contact surfaces 718, 719 for engaging the shroud 730 and recessed surfaces 716, 717 are provided by stepped recess cuts at the outer edges of the tenon shoulder 713. The recessed surfaces 716, 717 define the gaps 740, 741 between the shroud 730 and the tenon shoulder 713. In this way, the contact surfaces 718, 719 and the recessed surfaces 716, 717 are incorporated into the top surface of the tenon shoulder 713 and define gaps 740, 741 without regard to the topography of the top edge surfaces of the blade of the airfoil 710. This may provide design advantages for determining the relative surface areas and shapes of the contact surfaces 718, 719 and the recessed surfaces 716, 717 for a given airfoil design. The tenon 720, shroud 730, attachment device 750, and bushing 770 may be otherwise similar to those described above with regard to Figs. 1-5.

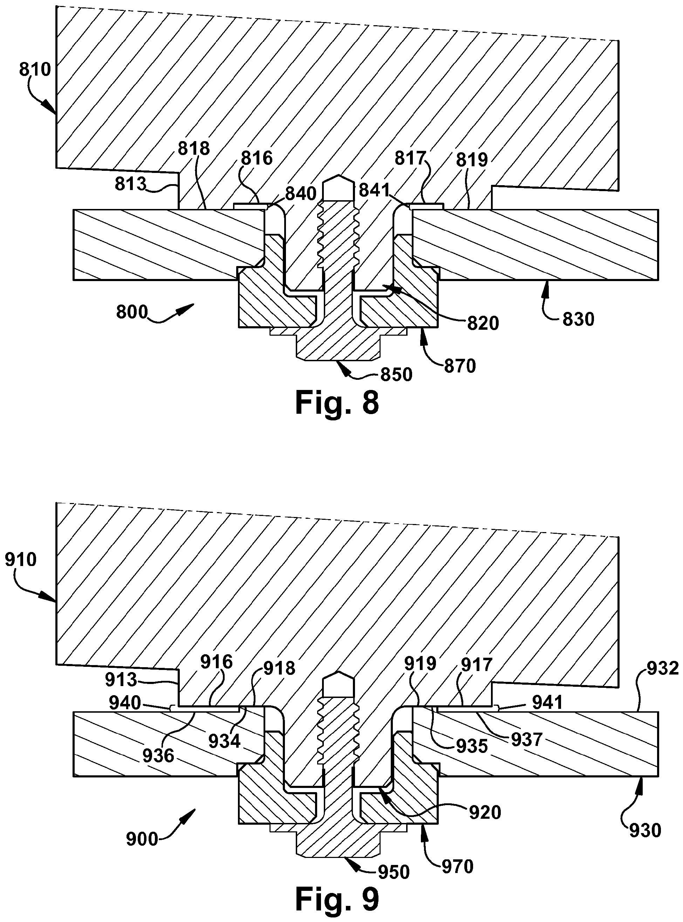

In Fig. 8, an example vane shroud assembly 800 is shown where the tenon shoulder 813 of the airfoil 810 includes both the contact surfaces 818, 819 for engaging the shroud 830 and recessed surfaces 816,817 are provided by stepped recess cuts adjacent tenon 820. The recessed surfaces 816, 817 define gaps 740, 741 between the shroud 830 and the tenon shoulder 813, extending from proximate the tenon 820 laterally to the transition to the contact surfaces 818, 819. The contact surfaces 818, 819 and the recessed surfaces 816, 817 are incorporated into the top surface of the tenon shoulder 813 and define gaps 840, 841 without regard to the topography of the top edge surfaces of the blade of the airfoil 810. Further, the gaps 840, 841 are separate and isolated from the space between the shroud 830 and the top edge surfaces of the blade of the airfoil 810. The tenon 820, shroud 830, attachment device 850, and bushing 870 may be otherwise similar to those described above with regard to Figs. 1-5.

In Fig. 9, an example vane shroud assembly 900 is shown where the tenon shoulder 913 of the airfoil 910 includes both the contact surfaces 918, 919 and the non-contact surfaces 916, 917, but the transition feature creating this difference is incorporated into the airfoil facing surface 932 of the shroud 930. More specifically, the shroud 930 includes contact surfaces 934, 935 and recessed surfaces 936, 937 are provided by stepped recess cuts extending to the outer edges of the shroud 930. The recessed surfaces 936, 937 define gaps 940, 941 between the shroud 930 and the tenon shoulder 913. In this configuration, the contact surfaces 918, 919 and non-contact surfaces 916, 917 form a continuous and coplanar surface on the tenon shoulder 913 and the gaps 940, 941 can be defined without modification of the tenon shoulder 913 or the topography of the top edge surfaces of the blade of the airfoil 910. The tenon 920, attachment device 950, and bushing 970 may be otherwise similar to those described above with regard to Figs. 1-5.

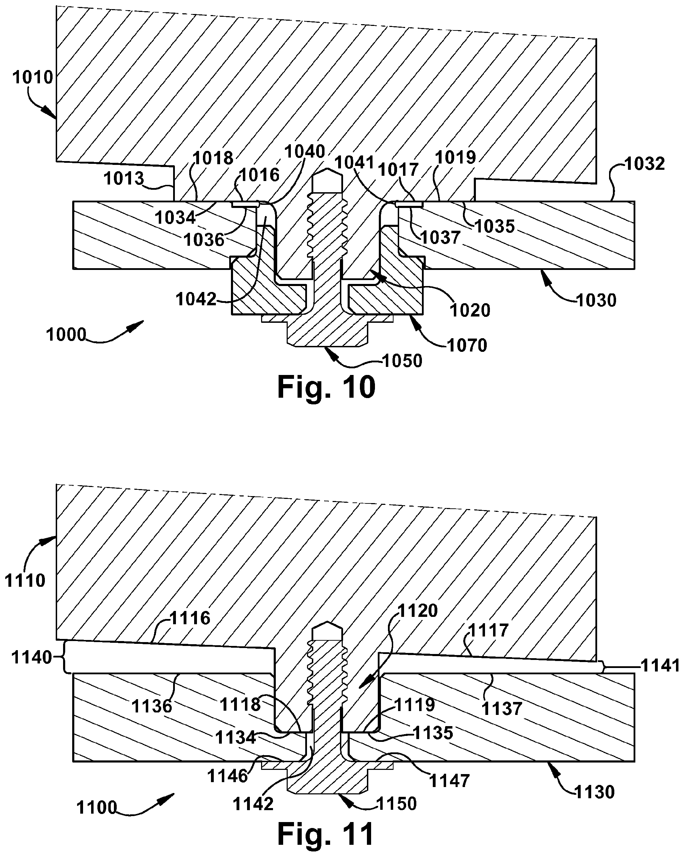

In Fig. 10, an example vane shroud assembly 1000 is shown where the tenon shoulder 1013 of the airfoil 1010 includes both the contact surfaces 1018, 1019 and the non-contact surfaces 1016, 1017, but the transition feature creating this difference is incorporated into the airfoil facing surface 1032 of the shroud 1030. More specifically, the shroud 1030 includes contact surfaces 1034, 1035 and recessed surfaces 1036, 1037 are provided by stepped recess cuts extending toward the through hole 1042 of the shroud 1030. The recessed surfaces 1036, 1037 define gaps 1040, 1041 between the shroud 1030 and the tenon shoulder 1013 adjacent the tenon 1020 and the through hole 1042 of the shroud 1030. As in the example in Fig. 9, the contact surfaces 1018, 1019 and non-contact surfaces 1016, 1017 form a continuous and coplanar surface on the tenon shoulder 1013 and the gaps 1040, 1041 can be defined without modification of the tenon shoulder 1013 or the topography of the top edge surfaces of the blade of the airfoil 1010. The tenon 1020, attachment device 1050, and bushing 1070 may be otherwise similar to those described above with regard to Figs. 1-5.

In Fig. 11, an example vane shroud assembly 1100 is shown where the tenon shoulder and bushing have been eliminated. The contact surfaces 1118, 1119 are provided by the end surface 1124 of the tenon 1120 and the recessed surfaces 1116, 1117 are provided by the top edge surfaces of the blade of the airfoil 1110. The tenon contact surfaces 1134, 1135 of the shroud 1130 are recessed from non-contact surfaces 1136, 1137 as a portion of the through hole 1142 for accommodating the tenon 1120. The gaps 1140, 1141 are defined between the recessed surfaces 1116, 1117 of the airfoil 1110 and the non-contact surfaces 1136, 1137 of the shroud 1130. In this configuration, the shroud 1130 receives the attachment force from the attachment device 1150 directly through attachment contact surfaces 1146, 1147 and related stresses are concentrated between the tenon contact surfaces 1134, 1135 and the attachment contact surfaces 1146, 1147, thus relieving the stress on the remainder of the shroud 1130. Attachment device 1150 may be otherwise similar to those described above with regard to Figs. 1-5.

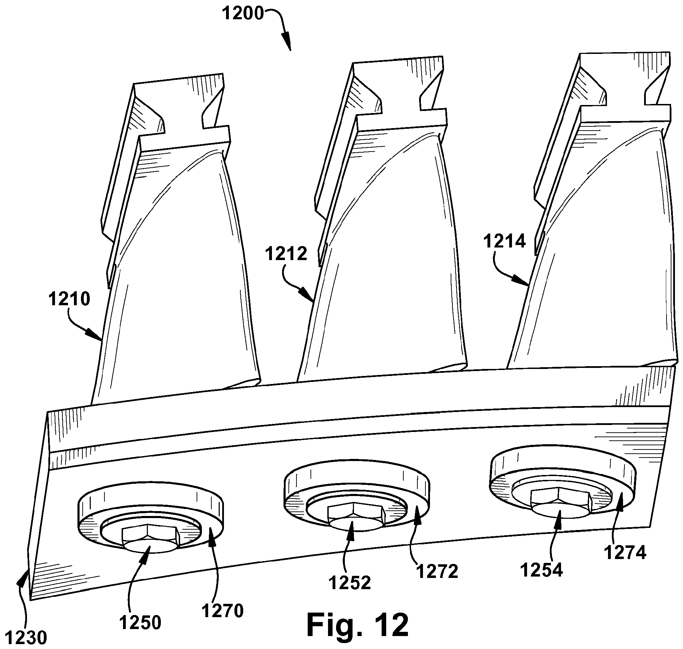

Fig. 12 shows a front perspective view of the example vane shroud assembly 1200 for a shroud 1230 that covers multiple airfoils 1210, 1212, 1214. As shown, the attachment components are replicated for each airfoil 1210, 1212, 1214 with attachment devices 1250, 1252, 1254 and bushings 1270, 1272, 1274 visible on the distal surface of the shroud 1230. Similarly, tenons, contact surfaces, and gaps would be replicated across each of the airfoils 1210, 1212, 1214, but are not visible in the figure. Other than using a common shroud 1230, this configuration may otherwise employ the components and installation features described with reference to one or more of the examples above.

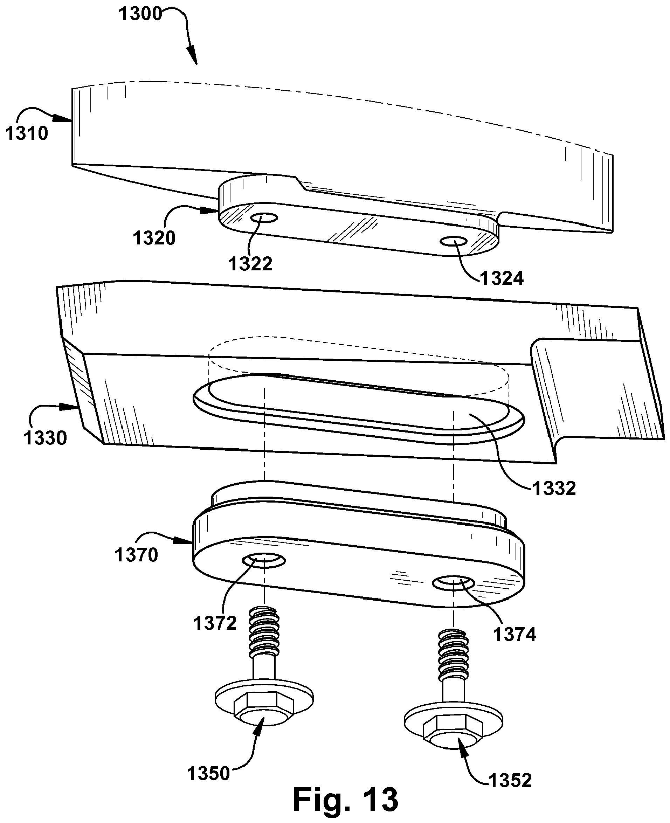

Fig. 13 shows an exploded perspective view of a portion of a vane shroud assembly 1300 with multiple attachment devices 1350, 1352 between a single airfoil 1310 and shroud 1330. The airfoil 1310 includes an elongated tenon 1320 defining two attachment recesses 1322, 1324. The shroud 1330 includes a similarly elongated through hole 1332. The vane shroud assembly 1300 uses an elongated bushing 1370 compatible with the elongated tenon 1320 and elongated through hole 1332 of the shroud 1330. The elongated bushing 1370 includes two through holes 1372, 1374 that align with the two attachment recesses 1322, 1324. The attachment devices 1350, 1352 can be inserted through the two through holes 1372, 1374 and into the two attachment recesses 1322, 1324 to provide the attachment force for installing the shroud 1330 on the airfoil 1310. Other than the modified shapes and multiple attachment devices 1350, 1352, this configuration may otherwise employ the components and installation features described with reference to one or more of the examples above.

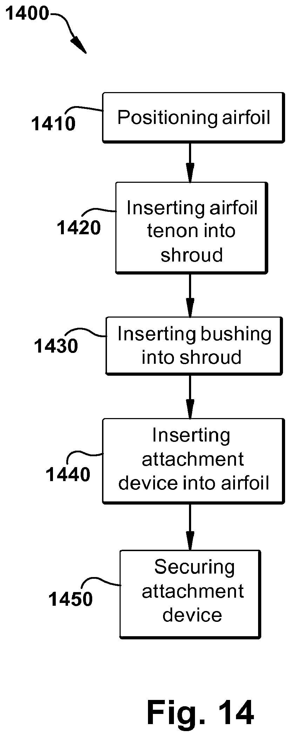

Fig. 14 shows an example method 1400 of installing or assembling a vane shroud assembly, such as one of the vane shroud assemblies described above. In step 1410, the airfoil is positioned for installation and assembly of the vane shroud assembly. For example, the airfoil may be mounted to a ring or casing or may be placed in a temporary fixture for attaching the shroud. This step may include positioning multiple airfoils, particularly where a single shroud is being used for multiple airfoils. In step 1420, the airfoil tenon is inserted into the shroud or the shroud is placed over the tenon of the airfoil. In some cases, this may include positioning the shroud over the tenons of multiple airfoils. In step 1430, a bushing is inserted into the shroud such that it laterally locates the shroud and provides contact surfaces between the tenon and the shroud. Note that not all configurations of vane shroud assemblies described above employ a bushing and this may be regarded as an optional step for some configurations. In step 1440, an attachment device is inserted through the bushing and shroud into the airfoil. As described above, the bushings and shrouds include through holes that enable the attachment device to be secured in an attachment recess in the end of the tenon. Also, some configurations may include multiple attachment devices. In step 1450, the attachment device is secured to provide an attachment force from the attachment recess in the tenon through the bushing and shroud to a contact surface between the shroud and the airfoil. For example, the attachment device may be a threaded component, such as a bolt, that is tightened by turning to secure the attachment device to the bushing, shroud, and airfoil. Once secured, the attachment force will be focused on contact surfaces between the shroud and airfoil, while a gap or gaps elsewhere between the shroud and airfoil will reduce stress on that portion of the shroud.

The foregoing drawings show some of the operational processing associated according to several embodiments of this disclosure. It should be noted that in some alternative implementations, the acts described may occur out of the order described or may in fact be executed substantially concurrently or in the reverse order, depending upon the act involved.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following numbered clauses:
1. A system comprising:
   an airfoil having a base end and a distal end, wherein the distal end comprises a shroud contact surface and a tenon;
   a shroud with a first contact surface in contact with the shroud contact surface of the airfoil and a second contact surface for receiving a securing force, wherein at least a portion of the securing force is translated through the first contact surface to the airfoil; and,
   an attachment device attaching to the airfoil and providing the securing force to the shroud; and,
   wherein the distal end of the airfoil and the shroud define a gap between adjacent portions of the airfoil and the shroud allowing stress from the securing force to be relieved in a portion of the shroud.
2. The system of clause 1, wherein the shroud contact surface of the airfoil is an end surface of the tenon.
3. The system of any preceding clause, wherein the tenon further comprises at least one lateral surface and wherein the shroud includes at least one internal surface defining a recess for receiving at least a portion of the tenon, and at least a portion of the lateral surface of the tenon directly engages at least a portion of the internal surface of the shroud.
4. The system of any preceding clause, wherein the attachment device is a bolt assembly with a shroud contact surface in contact with the shroud and providing the securing force to the shroud through the shroud contact surface of the bolt assembly and the shroud contact surface of the airfoil.
5. The system of any preceding clause, wherein the tenon has at least one lateral surface defining a cross-sectional shape selected from a polygon, a rectangle, an ellipse, and a circle.
6. The system of any preceding clause, wherein the attachment device is a plurality of bolt assemblies and the tenon defines a plurality of threaded recesses for receiving the plurality of bolt assemblies.
7. The system of any preceding clause, further comprising a bushing, wherein the attachment device engages the bushing and the shroud, and the retaining force received by the bushing is substantially translated through the bushing to the shroud.
8. The system of any preceding clause, wherein the distal end of the airfoil further comprises:
   a first planar surface surrounding and recessed from the tenon and including the shroud contact surface of the airfoil; and,
   a second planar surface adjacent and substantially parallel to the first planar surface and recessed therefrom to define the gap between adjacent portions of the shroud and the distal end of the airfoil.
9. The system of any preceding clause, wherein the distal end of the airfoil further comprises a third planar surface substantially parallel to and recessed from the first planar surface to define the gap between adjacent portions of the airfoil and the shroud proximate the third planar surface and wherein the third planar surface is closer to the shroud than the second planar surface.
10. The system of any preceding clause, wherein the shroud further comprises:
   a first planar surface defining an opening for accommodating the tenon and including the first contact surface of the shroud; and,
   a second planar surface adjacent and substantially parallel to the first planar surface and recessed therefrom to define the gap between adjacent portions of the shroud and the airfoil.
11. The system of any preceding clause, further comprising a plurality of airfoils and a plurality of attachment devices attached to the shroud.
12. A method comprising:
   positioning an airfoil having a base end and a distal end, wherein the distal end comprises a shroud contact surface and a tenon;
   inserting the tenon of the airfoil into a shroud with a first contact surface placed in contact with the shroud contact surface of the airfoil and a second contact surface for receiving a securing force;
   inserting an attachment device into the tenon of the airfoil through the shroud; and,
   securing the attachment device such that at least a portion of a securing force from the attachment device is translated through the first contact surface of the shroud to the shroud contact surface of the airfoil such that the distal end of the airfoil and the shroud define a gap between adjacent portions of the airfoil and the shroud allowing stress from the securing force to be relieved in a portion of the shroud.
13. The method of any preceding clause, wherein the shroud contact surface of the airfoil is an end surface of the tenon.
14. The method of any preceding clause, wherein the tenon further comprises at least one lateral surface and wherein the shroud includes at least one internal surface defining a recess into which at least a portion of the tenon is inserted and at least a portion of the lateral surface of the tenon directly engages at least a portion of the internal surface of the shroud.
15. The method of any preceding clause, wherein the attachment device is a bolt assembly with a shroud contact surface in contact with the shroud and securing comprises tightening the bolt assembly to provide the securing force to the shroud through the shroud contact surface of the bolt assembly and the shroud contact surface of the airfoil.
16. The method of any preceding clause, wherein the tenon has at least one lateral surface defining a cross-sectional shape selected from a polygon, a rectangle, an ellipse, and a circle.
17. The method of any preceding clause, wherein the attachment device is a plurality of bolt assemblies and the tenon defines a plurality of threaded recesses for inserting and securing the plurality of bolt assemblies.
18. The method of any preceding clause, further comprising inserting a bushing into the shroud, wherein inserting the attachment device engages the bushing and the shroud and securing the attachment device exerts the securing force on the shroud substantially through the bushing.
19. The method of any preceding clause, wherein the distal end of the airfoil further comprises:
   a first planar surface surrounding and recessed from the tenon and including the shroud contact surface of the airfoil; and,
   a second planar surface adjacent and substantially parallel to the first planar surface and recessed therefrom to define the gap between adjacent portions of the shroud and the distal end of the airfoil.
20. The method of any preceding clause, wherein the distal end of the airfoil further comprises a third planar surface substantially parallel to and recessed from the first planar surface to define the gap between adjacent portions of the airfoil and the shroud proximate the third planar surface and wherein the third planar surface is closer to the shroud than the second planar surface after securing the attachment device.

## Claims

1. A system comprising:
an airfoil (120, 410, 510, 610, 710, 810, 910, 1010, 1110, 1210, 1212, 1214, 1310) having a base end (122) and a distal end (124, 412), wherein the distal end (124, 412) comprises a shroud (130, 430, 530, 630, 730, 830, 930, 1030, 1130, 1230, 1330) contact surface and a tenon (420, 520, 620, 720, 820, 920, 1020, 1120, 1320);
a shroud (130, 430, 530, 630, 730, 830, 930, 1030, 1130, 1230, 1330) with a first contact surface in contact with the shroud (130, 430, 530, 630, 730, 830, 930, 1030, 1130, 1230, 1330) contact surface of the airfoil (120, 410, 510, 610, 710, 810, 910, 1010, 1110, 1210, 1212, 1214, 1310) and a second contact surface for receiving a securing force, wherein at least a portion (452) of the securing force is translated through the first contact surface to the airfoil (120, 410, 510, 610, 710, 810, 910, 1010, 1110, 1210, 1212, 1214, 1310); and,
an attachment device (150, 450, 550, 650, 750, 850, 950, 1050, 1150) attaching to the airfoil (120, 410, 510, 610, 710, 810, 910, 1010, 1110, 1210, 1212, 1214, 1310) and providing the securing force to the shroud (130, 430, 530, 630, 730, 830, 930, 1030, 1130, 1230, 1330); and,
wherein the distal end (124, 412) of the airfoil (120, 410, 510, 610, 710, 810, 910, 1010, 1110, 1210, 1212, 1214, 1310) and the shroud (130, 430, 530, 630, 730, 830, 930, 1030, 1130, 1230, 1330) define a gap between adjacent portions of the airfoil (120, 410, 510, 610, 710, 810, 910, 1010, 1110, 1210, 1212, 1214, 1310) and the shroud (130, 430, 530, 630, 730, 830, 930,1030, 1130, 1230, 1330) allowing stress from the securing force to be relieved in a portion (452) of the shroud (130, 430, 530, 630, 730, 830, 930, 1030, 1130, 1230, 1330).

2. The system of claim 1, wherein the shroud (130, 430, 530, 630, 730, 830, 930, 1030, 1130, 1230, 1330) contact surface of the airfoil (120, 410, 510, 610, 710, 810, 910, 1010, 1110, 1210, 1212, 1214, 1310) is an end surface (424, 1124) of the tenon (420, 520, 620, 720, 820, 920, 1020, 1120, 1320).

3. The system of claim 2, wherein the tenon (420, 520, 620, 720, 820, 920, 1020, 1120, 1320) further comprises at least one lateral surface and wherein the shroud (130, 430, 530, 630, 730, 830, 930, 1030, 1130, 1230, 1330) includes at least one internal surface defining a recess for receiving at least a portion (452) of the tenon (420, 520, 620, 720, 820, 920, 1020, 1120, 1320), and at least a portion (452) of the lateral surface of the tenon (420, 520, 620, 720, 820, 920, 1020, 1120, 1320) directly engages at least a portion (452) of the internal surface of the shroud (130, 430, 530, 630, 730, 830, 930, 1030, 1130, 1230, 1330).

4. The system of claim 2, wherein the attachment device (150, 450, 550, 650, 750, 850, 950, 1050, 1150) is a bolt assembly with a shroud (130, 430, 530, 630, 730, 830, 930, 1030, 1130, 1230, 1330) contact surface in contact with the shroud (130, 430, 530, 630, 730, 830, 930, 1030, 1130, 1230, 1330) and providing the securing force to the shroud (130, 430, 530, 630, 730, 830, 930, 1030, 1130, 1230, 1330) through the shroud (130, 430, 530, 630, 730, 830, 930, 1030, 1130, 1230, 1330) contact surface of the bolt assembly and the shroud (130, 430, 530, 630, 730, 830, 930, 1030, 1130, 1230, 1330) contact surface of the airfoil (120, 410, 510, 610, 710, 810, 910, 1010, 1110, 1210, 1212, 1214, 1310).

5. The system of any preceding claim, wherein the tenon (420, 520, 620, 720, 820, 920, 1020, 1120, 1320) has at least one lateral surface defining a cross-sectional shape selected from a polygon, a rectangle, an ellipse, and a circle.

6. The system of any preceding claim, wherein the attachment device (150, 450, 550, 650, 750, 850, 950, 1050, 1150) is a plurality of bolt assemblies and the tenon (420, 520, 620, 720, 820, 920, 1020, 1120, 1320) defines a plurality of threaded recesses for receiving the plurality of bolt assemblies.

7. The system of any preceding claim, further comprising a bushing (140, 430, 470, 570, 670, 770, 870, 970, 1070, 1370), wherein the attachment device (150, 450, 550, 650, 750, 850, 950, 1050, 1150) engages the bushing (140, 430, 470, 570, 670, 770, 870, 970, 1070, 1370) and the shroud (130, 430, 530, 630, 730, 830, 930, 1030, 1130, 1230, 1330), and the retaining force received by the bushing (140, 430, 470, 570, 670, 770, 870, 970, 1070, 1370) is substantially translated through the bushing (140, 430, 470, 570, 670, 770, 870, 970, 1070, 1370) to the shroud (130, 430, 530, 630, 730, 830, 930, 1030, 1130, 1230, 1330).

8. The system of any preceding claim, wherein the distal end (124, 412) of the airfoil (120, 410, 510, 610, 710, 810, 910, 1010, 1110, 1210, 1212, 1214, 1310) further comprises:
a first planar surface surrounding and recessed from the tenon (420, 520, 620, 720, 820, 920, 1020, 1120, 1320) and including the shroud (130, 430, 530, 630, 730, 830, 930, 1030, 1130, 1230, 1330) contact surface of the airfoil (120, 410, 510, 610, 710, 810, 910, 1010, 1110, 1210, 1212, 1214, 1310); and,
a second planar surface adjacent and substantially parallel to the first planar surface and recessed therefrom to define the gap between adjacent portions of the shroud (130, 430, 530, 630, 730, 830, 930, 1030, 1130, 1230, 1330) and the distal end (124, 412) of the airfoil (120, 410, 510, 610, 710, 810, 910, 1010, 1110, 1210, 1212, 1214, 1310).

9. The system of claim 8, wherein the distal end (124,412) of the airfoil (120, 410, 510, 610, 710, 810, 910, 1010, 1110, 1210, 1212, 1214, 1310) further comprises a third planar surface substantially parallel to and recessed from the first planar surface to define the gap between adjacent portions of the airfoil (120, 410, 510, 610, 710, 810, 910, 1010, 1110, 1210, 1212, 1214, 1310) and the shroud (130, 430, 530, 630, 730, 830, 930, 1030, 1130, 1230, 1330) proximate the third planar surface and wherein the third planar surface is closer to the shroud (130, 430, 530, 630, 730, 830, 930, 1030, 1130, 1230, 1330) than the second planar surface.

10. The system of any preceding claim, wherein the shroud (130, 430, 530, 630, 730, 830, 930, 1030, 1130, 1230, 1330) further comprises:
a first planar surface defining an opening for accommodating the tenon (420, 520, 620, 720, 820, 920, 1020, 1120, 1320) and including the first contact surface of the shroud (130, 430, 530, 630, 730, 830, 930, 1030, 1130, 1230, 1330); and,
a second planar surface adjacent and substantially parallel to the first planar surface and recessed therefrom to define the gap between adjacent portions of the shroud (130, 430, 530, 630, 730, 830, 930, 1030, 1130, 1230, 1330) and the airfoil (120, 410, 510, 610, 710, 810, 910, 1010, 1110, 1210, 1212, 1214, 1310).

11. The system of any preceding claim, further comprising a plurality of airfoils (1210, 1212, 1214) and a plurality of attachment device (150, 450, 550, 650, 750, 850, 950, 1050, 1150)s attached to the shroud (130, 430, 530, 630, 730, 830, 930, 1030, 1130, 1230, 1330).

12. A method comprising:
positioning an airfoil (120, 410, 510, 610, 710, 810, 910, 1010, 1110, 1210, 1212, 1214, 1310) having a base end (122) and a distal end (124, 412), wherein the distal end (124, 412) comprises a shroud (130, 430, 530, 630, 730, 830, 930, 1030, 1130, 1230, 1330) contact surface and a tenon (420, 520, 620, 720, 820, 920, 1020, 1120, 1320);
inserting the tenon (420, 520, 620, 720, 820, 920, 1020, 1120, 1320) of the airfoil (120, 410, 510, 610, 710, 810, 910, 1010, 1110, 1210, 1212, 1214, 1310) into a shroud (130, 430, 530, 630, 730, 830, 930, 1030, 1130, 1230, 1330) with a first contact surface placed in contact with the shroud (130, 430, 530, 630, 730, 830, 930, 1030, 1130, 1230, 1330) contact surface of the airfoil (120, 410, 510, 610, 710, 810, 910, 1010, 1110, 1210, 1212, 1214, 1310) and a second contact surface for receiving a securing force;
inserting an attachment device (150, 450, 550, 650, 750, 850, 950, 1050, 1150) into the tenon (420, 520, 620, 720, 820, 920, 1020, 1120, 1320) of the airfoil (120, 410, 510, 610, 710, 810, 910, 1010, 1110, 1210, 1212, 1214, 1310) through the shroud (130, 430, 530, 630, 730, 830, 930, 1030, 1130, 1230, 1330); and,
securing the attachment device (150, 450, 550, 650, 750, 850, 950, 1050, 1150) such that at least a portion (452) of a securing force from the attachment device (150, 450, 550, 650, 750, 850, 950, 1050, 1150) is translated through the first contact surface of the shroud (130, 430, 530, 630, 730, 830, 930, 1030, 1130, 1230, 1330) to the shroud (130, 430, 530, 630, 730, 830, 930, 1030, 1130, 1230, 1330) contact surface of the airfoil (120, 410, 510, 610, 710, 810, 910, 1010, 1110, 1210, 1212, 1214, 1310) such that the distal end (124, 412) of the airfoil (120, 410, 510, 610, 710, 810, 910, 1010, 1110, 1210, 1212, 1214, 1310) and the shroud (130, 430, 530, 630, 730, 830, 930, 1030, 1130, 1230, 1330) define a gap between adjacent portions of the airfoil (120, 410, 510, 610, 710, 810, 910, 1010, 1110, 1210, 1212, 1214,1310) and the shroud (130, 430, 530, 630, 730, 830, 930, 1030, 1130, 1230, 1330) allowing stress from the securing force to be relieved in a portion (452) of the shroud (130, 430, 530, 630, 730, 830, 930, 1030, 1130, 1230, 1330).

13. The method of claim 12, wherein the shroud (130,430, 530, 630, 730, 830, 930, 1030, 1130, 1230, 1330) contact surface of the airfoil (120, 410, 510, 610, 710, 810, 910, 1010, 1110, 1210, 1212, 1214, 1310) is an end surface (424, 1124) of the tenon (420, 520, 620, 720, 820, 920, 1020, 1120, 1320).

14. The method of claim 12 or 13, further comprising inserting a bushing (140, 430, 470, 570, 670, 770, 870, 970, 1070, 1370) into the shroud (130, 430, 530, 630, 730, 830, 930, 1030, 1130, 1230, 1330), wherein inserting the attachment device (150, 450, 550, 650, 750, 850, 950, 1050, 1150) engages the bushing (140, 430, 470, 570, 670, 770, 870, 970, 1070, 1370) and the shroud (130, 430, 530, 630, 730, 830, 930, 1030, 1130, 1230, 1330) and securing the attachment device (150, 450, 550, 650, 750, 850, 950, 1050, 1150) exerts the securing force on the shroud (130, 430, 530, 630, 730, 830, 930, 1030, 1130, 1230, 1330) substantially through the bushing (140, 430, 470, 570, 670, 770, 870, 970, 1070, 1370).

15. The method of claim 12, 13 or 14, wherein the distal end (124, 412) of the airfoil (120, 410, 510, 610, 710, 810, 910, 1010, 1110, 1210, 1212, 1214, 1310) further comprises:
a first planar surface surrounding and recessed from the tenon (420, 520, 620, 720, 820, 920, 1020, 1120, 1320) and including the shroud (130, 430, 530, 630, 730, 830, 930, 1030, 1130, 1230, 1330) contact surface of the airfoil (120, 410, 510, 610, 710, 810, 910, 1010, 1110, 1210, 1212, 1214, 1310); and,
a second planar surface adjacent and substantially parallel to the first planar surface and recessed therefrom to define the gap between adjacent portions of the shroud (130, 430, 530, 630, 730, 830, 930, 1030, 1130, 1230, 1330) and the distal end (124, 412) of the airfoil (120, 410, 510, 610, 710, 810, 910, 1010, 1110, 1210, 1212, 1214, 1310).
